# EUROPÄISCHE PATENTSCHRIFT

(11) **EP 1 189 784 B1**
(45) Veröffentlichungstag und Bekanntmachung des Hinweises auf die Patenterteilung: **13.08.2003**
(21) Anmeldenummer: 01911672.2
(22) Anmeldetag: 21.02.2001
(51) Int. Cl.: B60N 2/225

(54) **NEIGUNGSVERSTELLBESCHLAG FÜR DIE RÜCKENLEHNE EINES KRAFTFAHRZEUGSITZES**
INCLINATION ADJUSTMENT FITTING FOR THE BACKREST OF A VEHICLE SEAT
GARNITURE DE REGLAGE DE L'INCLINAISON DU DOSSIER D'UN SIEGE POUR VEHICULE

(30) Priorität: 03.05.2000 DE 10021403
(43) Veröffentlichungstag der Anmeldung: 27.03.2002
(73) Patentinhaber: Faurecia Autositze GmbH & Co. KG, 31655 Stadthagen (DE)
(72) Erfinder: KOCZEWSKI, Zbigniew, 31737 Rinteln (DE)
(74) Vertreter: Patentanwälte Dipl.-Ing. Bodo Thielking Dipl.-Ing. Otto Elbertzhagen
(86) Internationale Anmeldenummer: EP0101945
(87) Internationale Veröffentlichungsnummer: WO01083259

(56) Entgegenhaltungen:
- DE-A- 3 214 592
- DE-A- 4 304 725
- US-A- 5 586 833
- US-A- 5 681 086

## Beschreibung

### TECHNISCHES GEBIET

Die Erfindung betrifft einen Neigungsverstellbeschlag nach dem Oberbegriff des Patentanspruchs 1.

### STAND DER TECHNIK

Ein Neigungsverstellbeschlag der als bekannt vorausgesetzten Art (DE 43 04 725 C2) weist zwei miteinander über Verzahnungen eines Taumelgetriebes in Eingriff stehende Beschlagteile auf, die über Flanschbereiche unlösbar mit der Rückenlehne bzw. dem Sitzteil verbunden sind. Zur Aufnahme von im Crashfall auftretenden großen Axialkräften oder Momenten werden die Beschlagteile bereichsweise von Klammerbereichen, die die Beschlagteile in gegenseitiger Anlage halten, an ihrem Umfang übergriffen. Diese Sicherung gegen seitliche Belastungen ist unzureichend. Sie wurde bereits dadurch verbessert, daß ein zusätzlicher, während des Verschwenkens radial ausweichender Klammerbereich vorgesehen ist. Auch dieser zusätzliche Klammerbereich kann das Problem nur teilweise lösen.

Es ist außerdem ein Rastverstellgetriebe bekannt (DE 696 00 369 T2), dessen gegeneinander verdrehbare Ronden durch einen den Außenumfang ringförmig übergreifenden, geschlossenen Klammerbereich aneinander anliegend gehalten werden. Eine der Ronden wird mit dem Sitzteil und die andere Ronde mit der Rückenlehne verschweißt. Die Schweißverbindung kann leicht zum Verzug der Ronden führen. Daher ist eine derartige Konstruktion für ein eine präzise Führung erforderndes Taumelgetriebe nicht geeignet. Die durch dieses Rastverstellgetriebe zwischen Rückenlehne und Sitzteil gebildete Verbindung ist außerdem unlösbar, so daß Sitzteil und Rückenlehne nur im miteinander verbundenen Zustand gepolstert und bezogen werden können.

### DIE ERFINDUNG

Ausgehend von diesem Stand der Technik liegt der Erfindung die Aufgabe zugrunde, einen Neigungsverstellbeschlag der als bekannt vorausgesetzten Art so auszubilden, daß auch unter hohen Belastungen die miteinander kämmenden Verzahnungsbereiche im Eingriff bleiben.

Die Lösung dieser Aufgabe erfolgt mit den Merkmalen des Patentanspruchs 1.

Der erfindungsgemäße Neigungsverstellbeschlag ist auch im Crashfall sicher gegen ein Austauchen der kämmenden Verzahnungsbereiche geschützt.

Bevorzugte Ausgestaltungen der Erfindung ergeben sich aus den Unteransprüchen.

In einer bevorzugten Ausführungsform ist die Rückenlehne trotz des ringsum geschlossenen Klammerbereichs lösbar mit dem Sitzteil verbunden, so daß beide Teile jederzeit ausgewechselt werden können. Auf Schweißverbindungen kann verzichtet werden, ohne daß die Tragfähigkeit der Verbindung verringert wird. Auch bei einem beide Beschlagteile übergreifenden Schließring, wird die Drehmomentenbelastbarkeit durch dessen polygonale Umfangskontur nicht verringert.

### KURZBESCHREIBUNG DER ZEICHNUNGSABBILDUNG

Nachstehend wird eine bevorzugte Ausführungsform der Erfindung anhand der Zeichnungen im einzelnen beschrieben. Es zeigen:

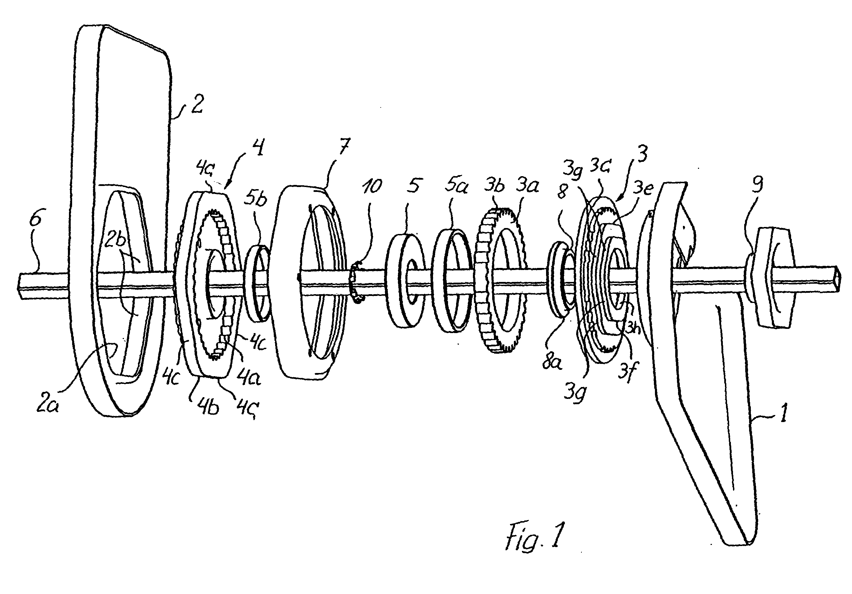

- Figur 1 -: eine perspektivische Explosionsdarstellung eines Neigungsverstellbeschlags mit Blickrichtung von der Außenseite;
- Figur 2 -: eine Explosionsdarstellung des Neigungsverstellbeschlags nach Fig. 1 mit Blickrichtung von der Innenseite;

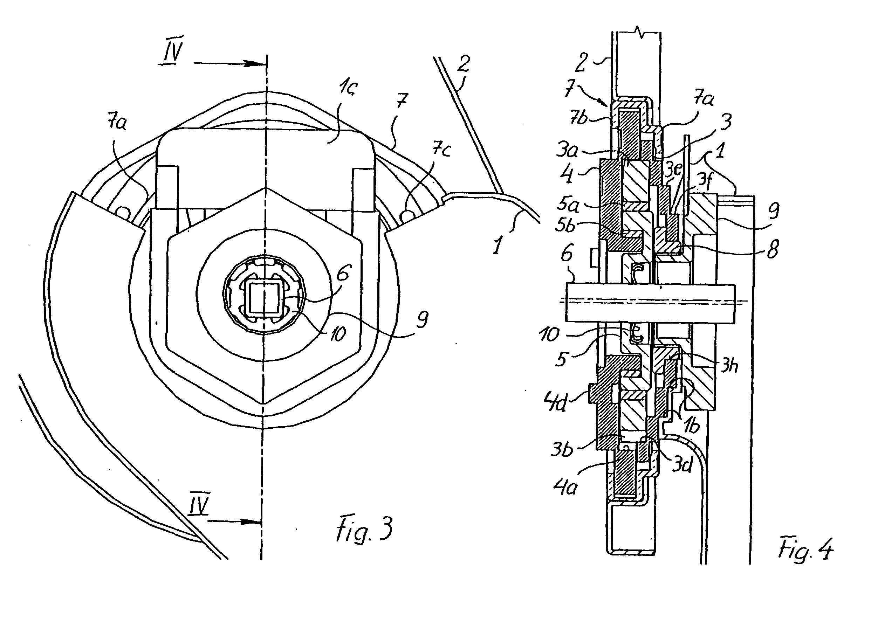

- Figur 3 -: eine Seitenansicht des Neigungsverstellbeschlags nach Fig. 1 von außen;
- Figur 4 -: einen Schnitt entlang der Schnittebene IV - IV in Fig. 3;
- Figur 5 -: eine Seitenansicht des Neigungsverstellbeschlags nach Fig. 1 von innen;
- Figur 6 -: eine vergrößerte, perspektivische Darstellung des Beschlagteils mit Innenverzahnung nach Fig. 1;

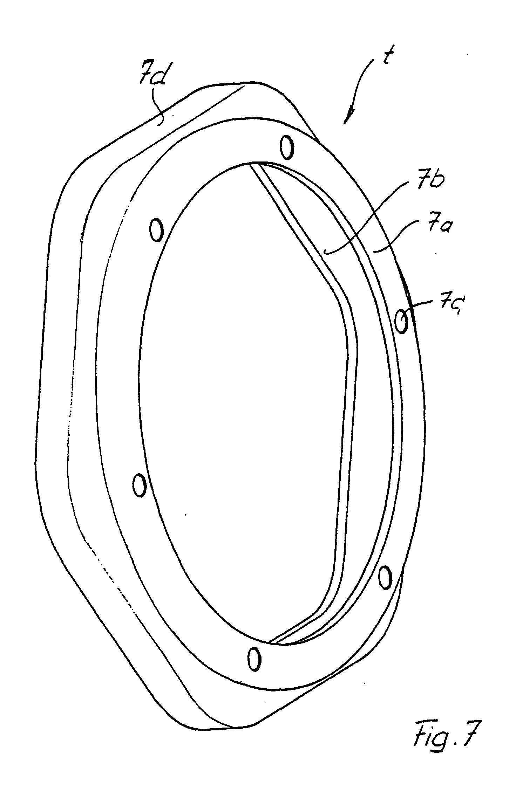

- Figur 7 -: eine vergrößerte perspektivische Darstellung des Schließrings nach Fig. 1;

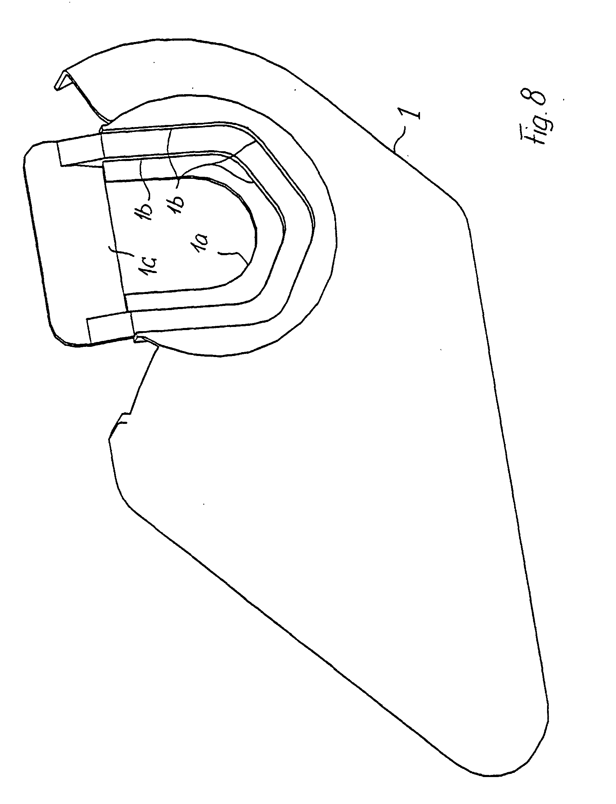

- Figur 8 -: eine vergrößerte perspektivische Darstellung des sitzteilfesten Flanschteils nach Fig. 1;

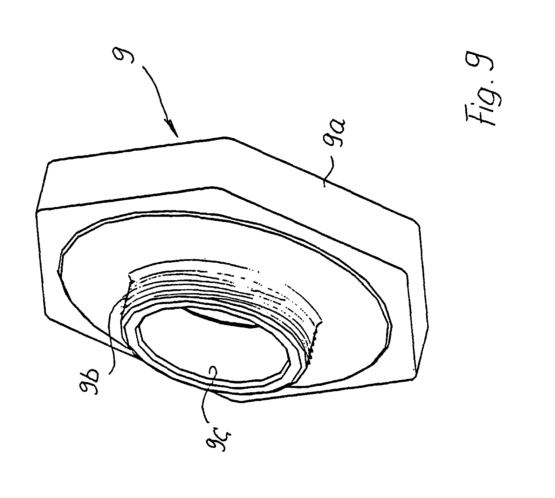

- Figur 9 -: eine vergrößerte perspektivische Darstellung des Gewinderings nach Fig. 1;
- Figur 10 -: eine vergrößerte perspektivische Darstellung der Federscheibe nach Fig. 1;

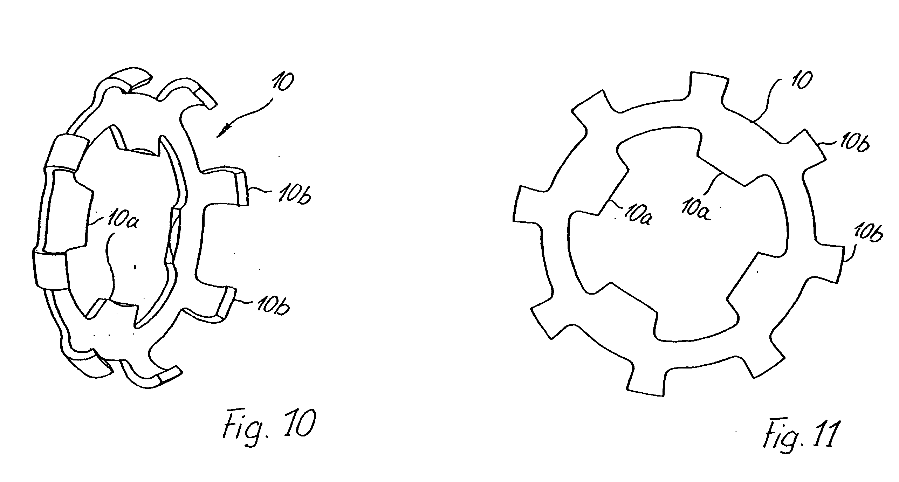

- Figur 11 -: eine Stirnansicht der Federscheibe nach Fig. 10.

### BESTER WEG ZUR AUSFÜHRUNG DER ERFINDUNG

Eine Rückenlehne ist über einen Neigungsverstellbeschlag verschenkbar an einem Sitzteil gelagert. Jeweils ein Neigungsverstellbeschlag ist in spiegelbildlicher Ausführung auf jeder Seite des Kraftfahrzeugsitzes angeordnet. Die beiden Neigungsvestellbeschläge sind durch eine Mehrkantwelle 6 synchron verstellbar.

An der Rückenlehne ist ein Flansch 2 befestigt, der eine polygonale, geschlossene Aufnahmeöffnung 2a trägt. In die Aufnahmeöffnung 2a ist ein Schließring 7 axial unverschieblich eingesetzt, der einen zur Aufnahmeöffnung 2a komplementären Umfangsbereich 7d aufweist. Mit den Außenflächen des polygonalen Umfangsbereichs 7d liegt der Schließring 7 an Gegenflächen 2b der Aufnahmeöffnungen 2a spielfrei an. An den Umfangsbereich 7d schließen radial einwärts gerichtete, ringförmige Klammerbereiche 7a und 7b an.

In den Schließring 7 sind zwei Beschlagteile 3 und 4 eingesetzt, von denen ein erstes Beschlagteil 4 einen radial spielfrei in den Schließring 7 passenden Außenumfang mit polygonalem Umfangsbereich 4b besitzt. Das erste Beschlagteil 4 wird durch Polygonflächen 4c am Umfangsbereich 4b drehfest im Schließring 7 und in der Aufnahmeöffnung 2a aufgenommen und ist damit rückenlehnenfest. Am rückenlehnenfesten Beschlagteil 4 sind mehrere zur Sitzinnenseite weisende Durchsetzungen zum Aufnieten einer nicht dargestellten Bremse vorgesehen.

Das zweite Beschlagteil 3 weist einen kreiszylindrischen Außenumfang 3c auf und wird drehbar im Schließring 7 gehalten. Nach dem Einsetzen der Beschlagteile 3 und 4 kann der Schließring 7 durch Einwärtsrollen des Klammerbereichs 7b um den Umfangsbereich 4b geschlossen werden. Der Schließring 7 hat im Axialschnitt dann eine etwa U-förmige Gestalt. Ein eventuell noch vorhandenes Axialspiel zwischen den Beschlagteilen 3 und 4 wird durch Ausprägungen 7c im Klammerbereich 7a beseitigt.

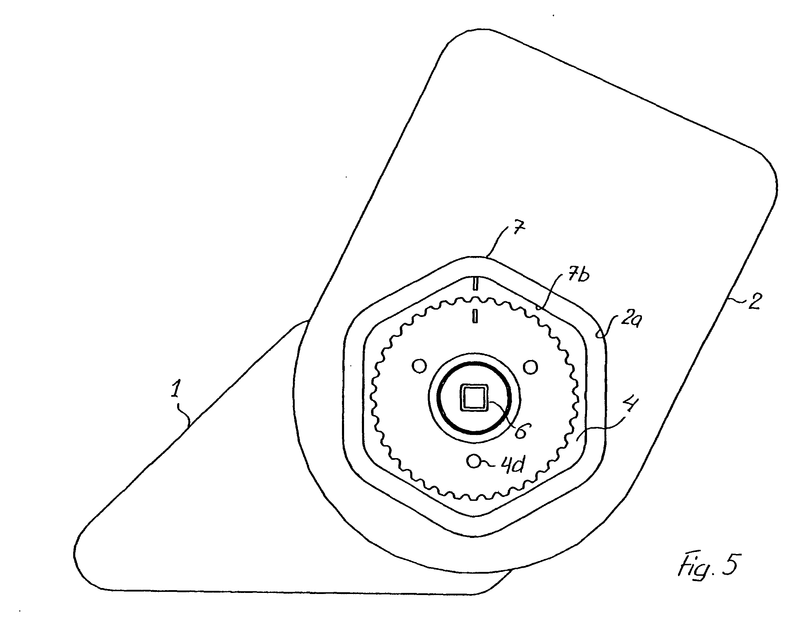

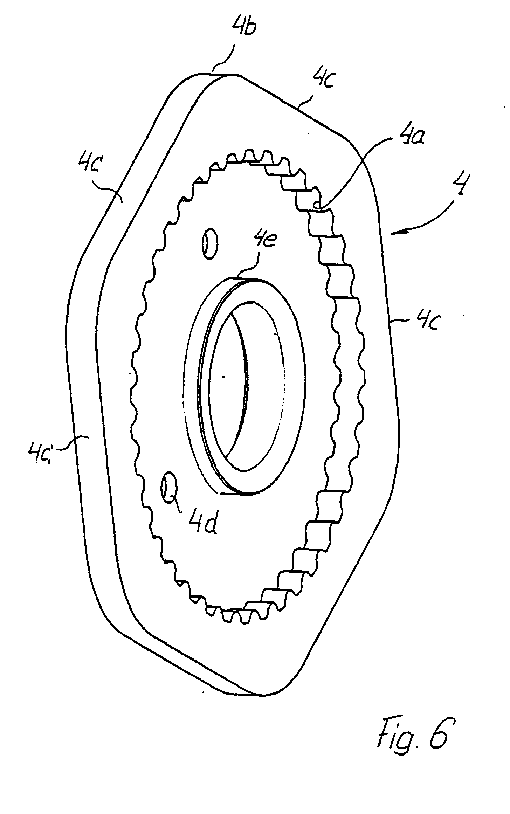

Das rückenlehnenfeste Beschlagteil 4 besitzt, wie in Fig. 6 dargestellt, eine Nabe 4e, die von einer Lagerbuchse 5b umgeben ist, auf der ein Exzenter 5 drehbar gelagert ist. Der Exzenter 5 wird von der Mehrkantwelle 6 formschlüssig durchsetzt, die von einer Federscheibe 10 axial unverschieblich im Exzenter 5 gehalten wird. Auf dem Außenumfang des Exzenters 5 befindet sich eine weitere Lagerbuchse 5a, die einen Zahnring 3a lagert. Der Zahnring 3a greift mit seiner Außenverzahnung 3b in eine am ersten Beschlagteil 4 vorgesehene Innenverzahnung 4a ein. Die Innenverzahnung 4a weist mindestens einen Zahn mehr als die Außenverzahnung 3b und, wie aus Fig. 4 ersichtlich, einen um die Zahnhöhe größeren Kopfkreisdurchmesser als die Außenverzahnung 3b auf.

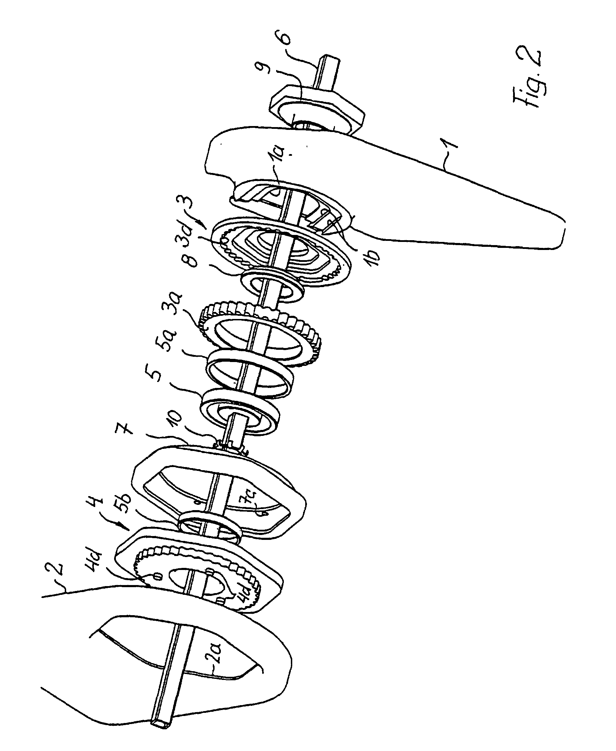

Der Zahnring 3a steht axial über das Beschlagteil 4 vor. Mit dem überstehenden Bereich der Außenverzahnung 3b ist der Zahnring 3a in einen in Fig. 2 sichtbaren, innenverzahnten Durchzug 3d am Beschlagteil 3 eingepreßt. An dem zweiten Beschlagteil 3 sind zwei weitere Durchzüge mit polygonalen Umfangsbereichen 3e und 3f ausgeprägt, die als unterschiedlich große Polygone mit Polygonflächen 3g ausgebildet sind. Mehrere der Polygonflächen 3g liegen an Gegenflächen 1b des sitzfesten Flansches 1 an, die eine Aufnahmeöffnung 1a umgeben. Die Aufnahmeöffnung 1a ist durch einen Quersteg 1c verschlossen. Die Polygonflächen 3g und die Gegenflächen 1b halten das zweite Beschlagteil 3 drehfest an dem sitzteilfesten Flansch 1.

In axialer Richtung wird das Beschlagteil 3 an dem Flansch 1 durch eine Gewindebuchse 8 mit einem Bund 8a anliegend gehalten, die eine zentrale Bohrung 3h des Beschlagteils 3 durchsetzt und in deren Innengewinde ein Gewindering 9 mit seinem Außengewinde 9b eingeschraubt ist. Der Gewindering 9 wird mittels eines Sechskants 9a gedreht. Er weist eine Durchtrittsöffnung 9c für die Mehrkantwelle 6 auf.

Nach dem Herausziehen der Mehrkantwelle 6 kann durch Lösen des Gewinderings 9 das Beschlagteil 3 jederzeit aus seiner Aufnahmeöffnung 1a ausgehoben werden. Die Rückenlehne läßt sich dann gemeinsam mit den an ihr über den Flansch 2 befestigten durch den Schließring 7 zusammengehaltenen Beschlagteilen 3 und 4 von dem Sitzteil entfernen.

Wie insbesondere aus den Zeichnungsfiguren 4, 10 und 11 ersichtlich, wird die Mehrkantwelle 6 in dem Exzenter 5 axial unverschieblich durch an der Federscheibe 10 angeordnete Klemmnasen 10a gehalten. Die Klemmnasen 10 spreizen beim Aufschieben auf die Mehrkantwelle 6 auf und verkeilen sich auf ihr. Die Federscheibe 10 besitzt außerdem über den Umfang verteilte Federfinger 10b, die sich an eine umlaufende Innenwand des Exzenters 5 unter Vorspannung anlegen.

Eine Drehung der Mehrkantwelle 6 mit dem auf ihr drehfest gehaltenen Exzenter 5 führt zu einer Abwälzbewegung der Außenverzahnung 3b des Zahnrings 3a auf der Innenverzahung 4a des Beschlagteils 4. Durch die unterschiedliche Zähnezahl verlagert sich das Beschlagteil 4 gegenüber dem mit dem Sitzteil drehfest verbundenen Beschlagteil 3 in Umfangsrichtung. Die Rückenlehne mit dem Flansch 2 wird mit jeder Umdrehung der Mehrkantwelle 6 um den durch die Zahnteilung und die abweichende Zähnezahl gegebenen Winkel verschwenkt.

## Patentansprüche

1. Neigungsverstellbeschlag für die Rückenlehne eines Kraftfahrzeugsitzes, bei dem ein am sitz befestigbares Beschlagteil (3) und ein an der Rückenlehne befestigbares und gemeinsam mit ihr schwenkbares Beschlagteil (4) über einen drehbaren Exzenter (5) miteinander verbunden sind und ein erstes Beschlagteil (4) eine Innenverzahnung (4a) aufweist, an der eine einen Teil eines Taumelgetriebes bildende Außenverzahnung (3b) des zweiten Beschlagteils (3) abläuft, wobei das erste und das zweite Beschlagteil (4; 3) übergreifende Klammerbereiche (7a; 7b) vorgesehen sind,
**dadurch gekennzeichnet,**
**daß** mindestens eines der Beschlagteile (3; 4) einen polygonalen Umfangsbereich (3e; 3f; 4b) aufweist, der in einer Aufnahmeöffnung (1a; 2a) an der Rückenlehne oder dem Sitzteil mit an mehreren Polygonflächen (3g; 4c) des Umfangsbereichs (3e; 3f; 4b) anliegenden Gegenflächen (1b; 2b) drehfest aufnehmbar ist und dessen Außenumfang von einem ringsum geschlossen verlaufenden Klammerbereich (7a; 7b) übergriffen wird.

2. Neigungsverstellbeschlag nach Anspruch 1,
**dadurch gekennzeichnet,**
**daß** mindestens die eine von zwei Aufnahmeöffnungen (1a; 2a) ringsum geschlossen ausgebildet ist.

3. Neigungsverstellbeschlag nach Anspruch 1 oder 2,
**dadurch gekennzeichnet,**
**daß** die Klammerbereiche (7a; 7b) an einem polygonal ausgebildeten Schließring (7) angeordnet sind, der den Außenumfang des ersten und des zweiten Beschlagteils (4; 3) übergreift.

4. Neigungsverstellbeschlag nach Anspruch 3,
**dadurch gekennzeichnet,**
**daß** der Schließring (7) im Querschnittsprofil annähernd U-förmig ausgebildet ist.

5. Neigungsverstellbeschlag nach einem oder mehreren der Ansprüche 1 bis 4,
**dadurch gekennzeichnet,**
**daß** der Schließring (7) zur Aufnahme der Beschlagteile (3; 4) mit geschlossen umlaufender Klammerung einen gerollten Klammerbereich (7a; 7b) aufweist.

6. Neigungsverstellbeschlag nach einem oder mehreren der Ansprüche 1 bis 5,
**dadurch gekennzeichnet,**
**daß** der Schließring (7) in einem Klammerbereich (7a) axial vorstehende, spielbeseitigende Ausprägungen (7c) aufweist.

7. Neigungsverstellbeschlag nach einem oder mehreren der Ansprüche 1 bis 6,
**dadurch gekennzeichnet,**
**daß** mindestens ei in einer polygonalen Aufnahmeöffnung (1a) drehfest aufnehmbares Beschlagteil (3) mit dem die Aufnahmeöffnung (1a) aufweisenden Rückenlehnen- oder Sitzteilbereich axial verschraubbar ist.

8. Neigungsverstellbeschlag nach Anspruch 7,
**dadurch gekennzeichnet,**
**daß** das Beschlagteil (3) zentral von einer einen Bund (8a) aufweisenden Gewindebuchse (8) durchsetzt wird, die mit einem das Beschlagteil (3) axial unverschieblich an den die Aufnahmeöffnung (1a) aufweisenden Sitzteil- oder Rückenlehnenbereich anpressenden Gewindering (9) verschraubt ist.

9. Neigungsverstellbeschlag nach einem oder mehreren der Ansprüche 1 bis 8,
**dadurch gekennzeichnet,**
**daß** der Gewindering (9) und die Gewindebuchse (8) von einer Mehrkantwelle (6) durchsetzt wird, auf der der Exzenter (5) drehfest gelagert ist.

10. Neigungsverstellbeschlag nach einem oder mehreren der Ansprüche 1 bis 9,
**dadurch gekennzeichnet,**
**daß** das die Außenverzahnung tragende Beschlagteil (3) einen innenverzahnten Durchzug (3d) aufweist, in den ein eine in die Innenverzahnung (4a) des anderen Beschlagteils (4) eingreifende Außenverzahnung (3b) tragender Zahnring (3a) eingepreßt ist.

11. Neigungsverstellbeschlag nach einem oder mehreren der Ansprüche 1 bis 10,
**dadurch gekennzeichnet,**
**daß** ein Beschlagteil (3) mehrere Durchzüge mit polygonal geformten Umfangsbereichen (3e; 3f) aufweist, die in die komplementär gestufte Aufnahmeöffnung (1a) unverdrehbar einsetzbar sind.

## Claims

1. Incline adjustment fitment for the backrest of a vehicle seat in which a fitment part (3) which is fixable on the seat and a fitment part (4) which is fixable on the backrest and is capable of swivelling therewith are connected together through a rotatable eccentric (5), and in which a first fitment part (4) has internal teeth (4a) on which run the external teeth (3b) of the second fitment part (3) forming part of a tumbler gearing, whereby clamping areas (7a, 7b) are provided which engage over the first and second fitment parts (4; 3)
**characterised in that**
at least one of the fitment parts (3, 4) has a polygonal circumferential area (3e, 3f, 4b) which can be housed rotationally secured in a socket opening (1a, 2a) on the backrest or the seat part which has counter faces (1b, 2b) bearing against several polygonal faces (3g, 4c) of the circumferential area (3e, 3f, 3g), with an annular closed clamping area (7a, 7b) engaging over the outer circumference thereof.

2. Incline adjustment fitment according to claim 1,
**characterised in that**
at least the one of the two socket openings (1a, 2a) is formed in a closed ring.

3. Inclined adjustment fitment according to claim 1 or 2,
**characterised in that**
the clamping areas (7a, 7b) are disposed on a polygonal closing ring (7) which engages over the outer circumference of the first and second fitment part (4, 3).

4. Incline adjustment fitment according to claim 3,
**characterised in that**
the closing ring (7) is formed with a substantially U-shaped cross-sectional profile.

5. Incline adjustment area according to one or more of claims 1 to 4,
**characterised in that**
the closing ring (7) has a rolled clamping area (7a, 7b) for receiving the fitment parts (3, 4) with closed circumferential clamping.

6. Incline adjustment fitment according to one or more of claims 1 to 5,
**characterised in that**
the closing ring (7) has in one clamping area (7a) axially projecting stamped areas (7c) which eliminate any play.

7. Incline adjustment fitment according to one or more of claims 1 to 6,
**characterised in that**
at least one fitment part (3) which can be housed rotationally secured in a polygonal socket opening (1a) can be axially screwed to the area of the backrest or seat part which has the socket opening (1a).

8. Incline adjustment fitment according to claim 7,
**characterised in that**
a threaded bush (8) passes centrally through the fitment part (3) wherein the bush which has a collar (8a) is screwed onto a threaded ring (9) which presses the fitment part (3) axially immovable against the seat part or backrest area having the socket opening (1a).

9. Incline adjustment fitment according to one or more of claims 1 to 8,
**characterised in that**
a multi-angled shaft (6) on which the eccentric (5) is mounted rotationally secured passes through the threaded ring (9) and the threaded bush (8).

10. Incline adjustment fitment according to one or more of claims 1 to 9,
**characterised in that**
the fitment part (3) supporting the external teeth has an internally toothed passage (3d) in which a toothed ring (3a) is pressed which supports external teeth (3b) which engage in the internal teeth (4a) of the other fitment part (4).

11. Incline adjustment fitment according to one or more of claims 1 to 10,
**characterised in that**
a fitment part (3) has several passages with polygonal shaped circumferential areas (3e, 3f) which can be inserted non-rotatable into the complementary stepped socket opening (1a).

## Revendications

1. Garniture de réglage de l'inclinaison du dossier d'un siège pour véhicule automobile, dans laquelle un élément de garniture (3), pouvant être fixé au siège, et un élément de garniture (4), pouvant être fixé au dossier et pouvant pivoter en commun avec celui-ci, sont reliés ensemble par l'intermédiaire d'un excentrique rotatif (5), et un premier élément de garniture (4) présentant une denture interne (4a), en prise avec une denture externe (3b) du deuxième élément de garniture (3) qui forme une partie d'un engrenage oscillant, des zones d'accrochage (7a ; 7b), agrippant le premier et le deuxième élément (4; 3) de ladite garniture de réglage étant prévus,
**caractérisée en ce que**
l'un des éléments (3; 4) de la garniture, au moins, présente un pourtour polygonal (3e; 3f; 4b), qui peut s'emboîter, solidaire en rotation, dans une ouverture de réception (1a; 2a), équipant le dossier ou le siège, avec des contre-surfaces (1b; 2b) portant contre plusieurs surfaces polygonales (3g; 4c) dudit pourtour (3e; 3f; 4b), et la périphérie étant agrippée par une zone d'accrochage (7a; 7b) fermée en forme d'anneau.

2. Garniture de réglage d'inclinaison selon la revendication 1,
**caractérisée en ce que**
l'une de deux ouverture (1a; 2a) est fermée en forme d'anneau.

3. Garniture de réglage d'inclinaison selon la revendication 1 ou 2,
**caractérisée en ce que**
les zones d'accrochage (7a; 7b) sont disposées sur une bague de fermeture (7) de conception polygonale, qui agrippe la zone périphérique du premier et du deuxième élément (4; 3) de la garniture.

4. Garniture de réglage d'inclinaison selon la revendication 3,
**caractérisée en ce que**
la bague de fermeture (7) est conçue en tant que profilé à section transversale approximativement en U.

5. Garniture de réglage d'inclinaison selon l'une ou plusieurs des revendications 1 à 4,
**caractérisée en ce que**
la bague de fermeture (7), destinée à recevoir les éléments de garniture (3 ; 4) avec serrage en circuit fermé, présente une zone de d'accrochage roulée.

6. Garniture de réglage d'inclinaison selon l'une ou plusieurs des revendications 1 à 5,
**caractérisée en ce que**
la bague de fermeture (7) présente, dans une zone d'accrochage (7a), des estampages (7c) en saillie axiale qui suppriment tout jeu.

7. Garniture de réglage d'inclinaison selon l'une ou plusieurs des revendications 1 à 6,
**caractérisée en ce que**
l'un des éléments de garniture (3), au moins, logé, solidaire en rotation, dans une ouverture de réception polygonale (1a), peut être vissé, dans le sens axial, à la partir du dossier ou du siège présentant l'ouverture de réception (la).

8. Garniture de réglage d'inclinaison selon la revendication 7,
**caractérisée en ce que**
l'élément de garniture (3) est traversé, au centre, par une douille filetée (8) présentant un collet (8a), laquelle douille filetée (8) est vissée avec une bague filetée (9) qui presse l'élément de garniture (3), non déplaçable dans le sens axial, contre la partie du siège ou du dossier présentant l'ouverture de réception (la).

9. Garniture de réglage d'inclinaison selon l'une ou plusieurs des revendications 1 à 8,
**caractérisée en ce que**
la bague filetée (9) et la douille filetée (8) sont traversées par un arbre polygonal sur lequel l'excentrique (5) est monté, solidaire en rotation.

10. Garniture de réglage d'inclinaison selon l'une ou plusieurs des revendications 1 à 9,
**caractérisée en ce que**
l'élément de garniture (3), portant la denture extérieure, présente un soyage denté intérieurement (3d) dans lequel une bague dentée (3a) est pressée, laquelle bague dentée (3a) est pourvue d'une denture extérieure (3b) qui entre en prise avec la denture intérieure (4b) de l'autre élément de garniture (4).

11. Garniture de réglage d'inclinaison selon l'une ou plusieurs des revendications 1 à 10,
**caractérisée en ce que**
l'élément de garniture (3) présente plusieurs soyages à pourtours polygonaux (3e ; 3f) qui peuvent être insérés, de manière fixe en rotation, dans l'ouverture de réception (1a) à gradins complémentaires.
